# EUROPÄISCHE PATENTSCHRIFT

(11) **EP 1 423 346 B1**
(45) Veröffentlichungstag und Bekanntmachung des Hinweises auf die Patenterteilung: **22.02.2006**
(21) Anmeldenummer: 02758459.8
(22) Anmeldetag: 10.08.2002
(51) Int. Cl.: C04B 38/00

(54) **ELASTISCHER ANORGANISCHER SCHAUM**
ELASTIC INORGANIC FOAM
MOUSSE INORGANIQUE ELASTIQUE

(30) Priorität: 25.08.2001 DE 10141777
(43) Veröffentlichungstag der Anmeldung: 02.06.2004
(73) Patentinhaber: BASF Aktiengesellschaft, 67056 Ludwigshafen (DE)
(72) Erfinder: BRAUN, Frank, 67063 Ludwigshafen (DE); BAUMGARTL, Horst, 67063 Ludwigshafen (DE)
(86) Internationale Anmeldenummer: PCT/EP2002/008989
(87) Internationale Veröffentlichungsnummer: WO 2003/018476

(56) Entgegenhaltungen:
- WO-A-89/05285
- DE-A- 3 617 129
- US-A- 3 737 332
- US-A- 4 133 691
- US-A- 6 085 839
- DATABASE WPI Week 199339 Derwent Publications Ltd., London, GB; AN 1993-309026 XP002231322 & JP 05 221743 A (RIKEN CORP)
- CHEMICAL ABSTRACTS, vol. 92, no. 14, 7. April 1980 (1980-04-07) Columbus, Ohio, US; abstract no. 115276m, Seite 278; XP000064274 & JP 54 131619 A (M. TSURUGAYA, ET AL.) 12. Oktober 1979 (1979-10-12)

## Beschreibung

Die Erfindung betrifft einen elastischen anorganischen Schaum auf Basis eines Alumosilikats sowie ein Verfahren zu seiner Herstellung.

Organische Schaumstoffe auf Basis von Polystyrol, Polyolefin und Polyurethan eignen sich hervorragend für die Wärme- und Schalldämmung, sie sind jedoch verhältnismäßig leicht entflammbar und daher für viele Einsatzzwecke ungeeignet. BASOTECT, ein Schaumstoff der BASF AG auf Basis von Melamin/Formaldehyd-Harzen zeichnet sich aufgrund seiner Offenzelligkeit und niedrigen Dichte durch hohe Elastizität aus, was von großem Vorteil für die Handhabbarkeit und Verarbeitbarkeit ist. Elastische Melamin/Formaldehyd-Schäume sind zwar schwer entflammbar, jedoch immer noch brennbar und erfüllen damit nicht die Bedingungen der Brandschutzklasse A nach DIN 4102. Diese Bedingungen werden naturgemäß von Schaumstoffen auf anorganischer Basis erfüllt. Die bisher bekannt gewordenen anorganischen Schäume weisen jedoch durchweg eine relativ hohe Dichte auf und sind somit nicht elastisch. Außerdem handelt es sich meist um sogenannte Ortschäume, bei denen die Komponenten direkt an der Baustelle z.B. in Hohlräume eingespritzt werden und dort aufschäumen und aushärten.

In DE-A 21 65 912 ist ein Verfahren zur Herstellung von Schaumstoffen beschrieben, bei dem wässrige Silikatlösungen zusammen mit säureabspaltenden Härtern mit Hilfe von flüchtigen organischen Treibmitteln verschäumt und gehärtet werden. Die Dichte der offenzelligen Schaumstoffe variiert zwischen 20 und 900 g/l. Die niedrigste, in den Beispielen angegebene Dichte beträgt 40 g/l. Elastische Schaumstoffe werden nicht erwähnt.

Die DE-A 32 44 523 beschreibt die Herstellung von Ortschäumen, wobei eine Alkalisilikatlösung mit einer Härterlösung und einem flüssigem Treibgas unter Druck vermischt wird. Als Härter werden säureabspaltende Carbonsäureester eingesetzt, die niedrigste, in den Beispielen angegebene Dichte beträgt 40 g/l. In beiden Druckschriften werden reine Silikatschäume beschrieben, die für die Praxis nicht ausreichend-feuchtigkeitsbeständig sind.

Die DE-A 36 17 129 beschreibt ebenfalls die Herstellung von Ortschäumen. Dabei wird eine wässrige Silikatlösung in Gegenwart eines Härters durch ein Gas verschäumt, welches bei einer chemischen Reaktion aus einem Gaserzeugungssystem, z.B. Wasserstoffperoxid, erzeugt wurde. Als Härter wird neben vielen anderen auch Alkalialuminat genannt. Die Dichte des Ortschaums schwankt zwischen 30 und 1000 g/l.

Die US 3,737,332 beschreibt einen geschlossenzelligen Schaum auf Basis von Tonerde, der durch Einleiten eines Treibgases in eine wässrige Dispersion von Tonerdepartikeln und einer geringen Menge eines Fettsäureamines erhalten wird.

Nach WO 89/05285 wird eine Keramikmasse hergestellt durch Verschäumen einer wässrigen Mischung von Alkalimetallsilikat, Alkalimetallaluminat, einem feuerfesten keramischen Material und Aluminiumpulver, welches als Treibmittel wirkendes Wasserstoff-Gas entwickelt. Die Dichten der Keramikmasse liegt im Bereich von 500 g/l.

Schließlich wird nach EP-A 407 921 ein Gemisch aus Alkaliwasserglas und einem Füllstoff, z.B. Aluminiumoxid mit einem chemischen Treibmittel, vorzugsweise Azodicarbonamid zu einem offenzelligen, gehärteten Schaumstoffkörper mit einer Dichte im Bereich von 50 bis 500 verschäumt.

Der Erfindung lag also die Aufgabe zugrunde, einen anorganischen Schaum bereitzustellen, der neben Unbrennbarkeit und Feuchtigkeitsbeständigkeit sich durch eine gute Elastizität auszeichnet und somit leicht handhabbar und verarbeitbar ist. Er sollte weitgehend offenzellig sein und sich damit auch für die Schallisolierung eignen. Im Gegensatz zu Ortschäumen sollte er in definierter Raumform z.B. als Block, Platte oder regelmäßiges Partikel vorliegen.

Diese Aufgaben werden erfindungsgemäß gelöst durch einen offenzelligen anorganischen Schaum auf Basis eines Alumosilikats mit einem Molverhältnis SiO₂:Al₂O₃ von 20:1 bis 1:1, welcher eine Dichte von weniger als 25 g/l und eine Offenzelligkeit nach DIN ISO 4590 von mehr als 50 % aufweist. Es wird angenommen, dass die Elastizität der erfindungsgemäßen Schäume darauf beruht, dass offenzellige Schäume niedriger Dichte im wesentlichen aus dünnen Zellstegen bestehen, die relativ leicht deformierbar sind. Das Molverhältnis SiO₂:Al₂O₃ beträgt vorzugsweise 10:1 bis 2:1; die Dichte des Schaumes ist vorzugsweise niedriger als 20g/l und beträgt insbesondere 8 bis 18 g/l. Die Offenzelligkeit, gemessen nach DIN ISO 4590 ist vorzugsweise größer als 80 %.

In einer bevorzugten Ausführungsform wird der erfindungsgemäße Schaum dadurch hergestellt, dass man eine wässrige Lösung eines Alkalimetallsilikats mit einer wässrigen Lösung eines Alkalimetallaluminats im Molverhältnis 20:1 bis 1:1 in Gegenwart eines leichtflüchtigen organischen Treibmittels und eines Tensids umsetzt und dabei verschäumt.

Die Alkalimetallsilikate weisen die Formel Me₂O·(SiO₂)₂₋₄ auf, wobei Me ein Alkalimetall, vorzugsweise Natrium ist. Bevorzugt sind Wasserglaslösungen mit einem Feststoffgehalt zwischen 20 und 70 Gew.-%, insbesondere 30 bis 60 Gew.-%

Die Alkalimetallaluminate weisen die Formel Me[Al(OH)₄] auf, bevorzugtes Alkalimetall ist wieder Natrium. Auch hier sind 20 bis 70, insbesondere 30 bis 60 Gew.-%ige Lösungen bevorzugt.

Bevorzugte flüchtige Treibmittel sind organische Verbindungen, wie z.B. Kohlenwasserstoffe, halogenierte Kohlenwasserstoffe, Alkohole, Ether, Ketone und Ester. Besonders bevorzugt sind C₄-C₆-Kohlenwasserstoffe, insbesondere Pentane. Die Treibmittel werden bevorzugt in Mengen von 1 bis 40, insbesondere 5 bis 15 Gew.-%, bezogen auf die Feststoffe, eingesetzt.

Zur Emulgierung des Treibmittels und zur Stabilisierung des Schaumes ist der Zusatz eines Emulgators oder eines Emulgatorgemisches erforderlich. Als Emulgator können anionische, kationische und nichtionische Tenside verwendet werden.

Geeignete anionische Tenside sind Diphenylenoxidsulfonate, Alkan- und Alkylbenzolsulfonate, Alkylnaphthalinsulfonate, Olefinsulfonate, Alkylethersulfonate, Alkylsulfate, Alkylethersulfate, alpha-Sulfofettsäureester, Acylaminoalkansulfonate, Acylisethionate, Alkylethercarboxylate, N-Acylsarcosinate, Alkyl- und Alkyletherphosphate. Als nichtionische Tenside können Alkylphenolpolyglykolether, Fettalkoholpolyglykolether, Fettsäurepolyglykolether, Fettsäurealkanolamide, EO/PO-Blockcopolymere, Aminoxide, Glycerinfettsäureester, Sorbitanester und Alkylpolyglucoside verwendet werden. Als kationische Tenside kommen Alkyltriammoniumsalze, Alkylbenzyldimethylammoniumsalze und Alkylpyridiniumsalze zum Einsatz. Die Emulgatoren werden vorzugsweise in Mengen von 0,1 bis 5 Gew.-%, bezogen auf das Harz, zugesetzt.

Die zu verschäumende Mischung kann weiterhin übliche Zusatzstoffe, wie z.B. Pigmente und Füllstoffe enthalten.

Das Verfahren wird zweckmäßigerweise in mehreren unmittelbar aufeinanderfolgenden Schritten durchgeführt:
a) Zunächst werden Alkalimetallsilikatlösung, Treibmittel und Emulgator vermischt;
b) Dann wird zu dieser Mischung die Alkalimetallaluminatlösung zugesetzt. Die Temperatur sollte dabei unterhalb von 50°C, vorzugsweise unterhalb von 30°C und insbesondere zwischen 10 und 25°C liegen. Bei diesen Temperaturen setzt zwar die Umsetzung des Silikats mit dem Aluminat schon ein; es lässt sich aber immer noch eine homogene Mischung herstellen.
c) Anschließend wird die Mischung auf Temperaturen oberhalb von 50°C, vorzugsweise zwischen 80 und 100°C erwärmt. Dabei verdampft das Treibmittel und der Schäumvorgang setzt ein. Gleichzeitig wird die Umsetzung des Silikats mit dem Aluminat weitergeführt, wobei sich schließlich ein fester Schaum bildet.
d) Schließlich wird der feuchte Schaum auf Temperaturen oberhalb von 100°C erhitzt, wobei das Wasser verdampft.

Das Erwärmen bzw. Erhitzen in den Stufen c) und d) kann mit üblichen Methoden durchgeführt werden, z.B. mit Heizschrank, Heißluft oder Mikrowelle. Die Mikrowelle ist bevorzugt, weil sie eine besondes homogene und schnelle Erwärmung bzw. Erhitzung ermöglicht. Die Stufen c) und d) können auch in einem Zug duchgeführt werden.

Bei einer anderen Ausführungsform wird die nach Schritt b) erhaltene Mischung einem geringeren Druck ausgesetzt. Dadurch kommt es zur Expansion des Treibmittels und es bildet sich ebenfalls ein fester Schaum. Dieser wird dann wie in Schritt d) behandelt. Die Druckminderung beinhaltet auch, dass die Mischung unter einem Druck P1 durch eine Düse auf einen Druck P2<P1 entspannt wird, wobei P1>1 bar ist. Bei diesen Ausführungsformen ist eine Erwärmung zum Zweck der Schäumung nicht zwingend nötig.

Bei dem beschriebenen Verfahren entstehen Schaumstoffblöcke bzw. -platten, die zu beliebigen Formen zurechtgeschnitten werden können.

Der erfindungsgemäße Schaum kann auf vielfältige Weise zur Wärme- und Schalldämmung im Bauwesen und im Automobilbau eingesetzt werden, beispielsweise zur Wärmedämmung im Hausbau oder als schalldämmendes Material im Motorraum.

## Patentansprüche

1. Anorganischer Schaum auf Basis eines Alumosilikats mit einem Molverhältnis SiO₂:Al₂O₃ von 20:1 bis 1:1, **gekennzeichnet durch** eine Dichte von weniger als 25 g/l und eine Offenzelligkeit nach DIN ISO 4590 von mehr als 50 %.

2. Verfahren zur Herstellung des anorganischen Schaums nach Anspruch 1, **dadurch gekennzeichnet, dass** man eine wässrige Lösung eines Alkalimetallsilikats mit einer wässrigen Lösung eines Alkalimetallaluminats im Molverhältnis Silikat zu Aluminat von 20:1 bis 1:1 in Gegenwart einer flüchtigen organischen Verbindung als Treibmittel und eines Emulgators umsetzt und dabei verschäumt.

3. Verfahren nach Anspruch 2, **dadurch gekennzeichnet, dass** das Treibmittel ein C₄-C₆-Kohlenwasserstoff ist.

4. Verfahren nach Anspruch 2, **gekennzeichnet durch** folgende Schritte:
a) Alkalimetallsilikat, Treibmittel und Emulgator werden vermischt,
b) zu dieser Mischung wird bei Temperaturen unterhalb von 50°C das Alkalimetallaluminat zugegeben und vermischt,
c) die Mischung wird auf Temperaturen zwischen 50 und 100°C erwärmt,
d) die Mischung wird auf Temperaturen oberhalb von 100°C erhitzt, wobei das Wasser verdampft.

5. Verfahren nach Anspruch 4, **dadurch gekennzeichnet, dass** die Schritte c) und d) in einem Zug durchgeführt werden.

6. Verfahren nach Anspruch 4, **dadurch gekennzeichnet, dass** das Erwärmen bzw. Erhitzen mittels Mikrowelle vorgenommen wird.

7. Vefahren nach Anspruch 2, **gekennzeichnet durch** folgende Schritte:
a) Alkalimetallsilikat, Treibmittel und Emulgator werden vermischt,
b) zu dieser Mischung wird bei Temperaturen unterhalb 50°C das Alkalimetallaluminat zugegeben und vermischt,
c) die Mischung wird einem verminderten Druck ausgesetzt,
d) die Mischung wird auf Temperaturen oberhalb 50°C erwärmt, wobei das Wasser verdampft.

8. Verfahren nach Anspruch 7, **dadurch gekennzeichnet, dass** Durckminderung und Erwärmen in einem Schritt durchgeführt werden.

9. Verfahren nach Anspruch 2, **gekennzeichnet durch** folgende Schritte:
a) Alkalimetallsilikat, Treibmittel und Emulgator werden vermischt,
b) zu dieser Mischung wird bei Temperaturen unterhalb 50°C das Alkalimetallaluminat zugegeben und vermischt,
c) die Mischung wird **durch** eine Düse gepresst und auf einen geringeren Druck entspannt,
d) die Mischung wird auf Temperaturen oberhalb 50°C erwärmt, wobei das Wasser verdampft.

10. Verwendung des anorganischen Schaums nach Anspruch 1 zur Wärme- und Schalldämmung im Bauwesen und im Automobilbau.

## Claims

1. An aluminosilicate-based inorganic foam having an SiO₂:Al₂O₃ molar ratio of from 20:1 to 1:1, a density of less than 25 g/l and a proportion of open cells in accordance with DIN ISO 4590 of more than 50%.

2. A process for producing an inorganic foam according to claim 1, which comprises reacting an aqueous solution of an alkali metal silicate with an aqueous solution of an alkali metal aluminate in a molar ratio of silicate to aluminate of from 20:1 to 1:1 in the presence of a volatile organic compound as blowing agent and an emulsifier and foaming it during the reaction.

3. The process according to claim 2, wherein the blowing agent is a C₄-C₆-hydrocarbon.

4. The process according to claim 2 which comprises the following steps:
a) alkali metal silicate, blowing agent and emulsifier are mixed,
b) the alkali metal aluminate is added to this mixture at below 50°C and mixed in,
c) the mixture is heated to 50-100°C,
d) the mixture is heated to above 100°C, resulting in evaporation of the water.

5. The process according to claim 4, wherein steps c) and d) are carried out as a single process step.

6. The process according to claim 4, wherein heating is carried out by means of microwaves.

7. The process according to claim 2 which comprises the following steps:
a) alkali metal silicate, blowing agent and emulsifier are mixed,
b) the alkali metal aluminate is added to this mixture at below 50°C and mixed in,
c) the mixture is placed under subatmospheric pressure,
d) the mixture is heated to above 50°C, resulting in evaporation of the water.

8. The process according to claim 7, wherein the pressure reduction and heating are carried out in one step.

9. The process according to claim 2 which comprises the following steps:
a) alkali metal silicate, blowing agent and emulsifier are mixed,
b) the alkali metal aluminate is added to this mixture at below 50°C and mixed in,
c) the mixture is expressed through a nozzle and depressurized to a lower pressure,
d) the mixture is heated to above 50°C, resuting in evaporation of the water.

10. The use of an inorganic foam according to claim 1 for thermal and acoustic insulation in the building industry and in automobile construction.

## Revendications

1. Mousse inorganique à base d'un aluminosilicate présentant un rapport molaire SiO₂/Al₂O₃ de 20/1 à 1/1, **caractérisée par** une densité inférieure à 25 g/l et un état ouvert des alvéoles selon la norme DIN ISO 4590 supérieur à 50 %.

2. Procédé de préparation de la mousse inorganique suivant la revendication 1, **caractérisé en ce qu'**on fait réagir une solution aqueuse d'un silicate de métal alcalin avec une solution aqueuse d'un aluminate de métal alcalin dans un rapport molaire silicate/aluminate de 20/1 à 1/1, en présence d'un composé organique volatil, comme agent gonflant, et d'un agent émulsionnant et on transforme le tout en mousse.

3. Procédé suivant la revendication 2, **caractérisé en ce que** l'agent gonflant est un hydrocarbure en C₄-C₆.

4. Procédé suivant la revendication 2, **caractérisé par** les étapes suivantes :
a) on mélange un silicate de métal alcalin, un agent gonflant et un émulsionnant,
b) on ajoute à ce mélange l'aluminate de métal alcalin à des températures inférieures à 50°C et on mélange,
c) on échauffe le mélange à des températures entre 50 et 100°C,
d) on chauffe le mélange à des températures supérieures à 100°C, tandis que l'eau s'évapore.

5. Procédé suivant la revendication 4, **caractérisé en ce que** les étapes c) et d) sont effectuées d'un seul trait.

6. Procédé suivant la revendication 4, **caractérisé en ce que** l'échauffement ou respectivement le chauffage est effectué au moyen de micro-ondes.

7. Procédé suivant la revendication 2, **caractérisé par** les étapes suivantes :
a) on mélange un silicate de métal alcalin, un agent gonflant et un émulsionnant,
b) on ajoute à ce mélange l'aluminate de métal alcalin à des températures inférieures à 50°C et on mélange,
c) on soumet le mélange à une pression réduite,
d) on échauffe le mélange à des températures supérieures à 50°C, tandis que l'eau s'évapore.

8. Procédé suivant la revendication 7, **caractérisé en ce que** la réduction de pression et l'échauffement sont effectués en une seule étape.

9. Procédé suivant la revendication 2, **caractérisé par** les étapes suivantes :
a) on mélange un silicate de métal alcalin, un agent gonflant et un émulsionnant,
b) on ajoute à ce mélange l'aluminate de métal alcalin à des températures inférieures à 50°C et on mélange,
c) on presse le mélange au travers d'un ajutage et on détend à une pression plus faible,
d) on échauffe le mélange à des températures supérieures à 50°C, tandis que l'eau s'évapore.

10. Utilisation de la mousse inorganique suivant la revendication 1 pour une isolation thermique et acoustique dans le bâtiment et la construction automobile.
